(19) Europäisches Patentamt
European Patent Office
Office européen des brevets

(11) EP 4 237 328 B1

(12) EUROPEAN PATENT SPECIFICATION

(45) Date of publication and mention
of the grant of the patent:
**12.02.2025 Bulletin 2025/07**

(21) Application number: 20926359.9

(22) Date of filing: 14.12.2020

(51) International Patent Classification (IPC):
**B64C 27/10** (2023.01)   **B64C 27/467** (2006.01)

(52) Cooperative Patent Classification (CPC):
**B64C 27/10; B64C 27/467; B64U 30/24**

(86) International application number:
**PCT/SG2020/050745**

(87) International publication number:
**WO 2022/093109 (05.05.2022 Gazette 2022/18)**

(54) **AERODYNAMIC OPTIMIZATION OF THE SIZING AND BLADE DESIGNS OF COROTATING COAXIAL ROTORS**

AERODYNAMISCHE OPTIMIERUNG DER GRÖSSENBESTIMMUNG UND SCHAUFELKONSTRUKTIONEN VON GLEICHDREHENDEN KOAXIALEN ROTOREN

OPTIMISATION AÉRODYNAMIQUE DES CONCEPTIONS DE DIMENSIONNEMENT ET DE PALE DE ROTORS COAXIAUX EN COROTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 29.10.2020 SG 10202010770P

(43) Date of publication of application:
**06.09.2023 Bulletin 2023/36**

(73) Proprietor: **ST Engineering Aerospace Ltd.**
**Singapore 539938 (SG)**

(72) Inventor: **CHAN, Keen Ian**
**Singapore 539938 (SG)**

(74) Representative: **Viering, Jentschura & Partner mbB**
**Patent- und Rechtsanwälte**
**Am Brauhaus 8**
**01099 Dresden (DE)**

(56) References cited:
WO-A1-2018/045575     US-A1- 2012 061 509
US-A1- 2019 002 096     US-A1- 2019 002 096
US-B2- 10 752 352

• "NASA Technical Paper", vol. NASA-TP-3675, 1 January 1997, NASA, US, ISSN: 0148-8341, article COLIN. P COLEMAN: "A Survey of Theoretical and Experimental Coaxial Rotor Aerodynamic Research", pages: 1 - 34, XP055447332
• WHITESIDE SIENA, ZAWODNY NIKOLAS, FEI XIAOFAN, PETTINGILL NICOLE A., PATTERSON MICHAEL D., ROTHHAAR PAUL: "An Exploration of the Performance and Acoustic Characteristics of UAV-Scale Stacked Rotor Configurations", AIAA SCITECH 2019 FORUM, AMERICAN INSTITUTE OF AERONAUTICS AND ASTRONAUTICS, RESTON, VIRGINIA, vol. 1, 7 January 2019 (2019-01-07), Reston, Virginia, pages 1 - 20, XP055937868, ISBN: 978-1-62410-578-4, DOI: 10.2514/6.2019-1071

**Description**

FIELD OF INVENTION

The present invention relates broadly to aerodynamic optimization of the sizing and blade designs of corotating coaxial rotors.

BACKGROUND

Any mention and/or discussion of prior art throughout the specification should not be considered, in any way, as an admission that this prior art is well known or forms part of common general knowledge in the field.

Aerodynamic optimization of the sizing and blade designs of hovering coaxial rotors can be modelled as a pair of dissimilar actuator discs. For corotating coaxial rotors, i.e. the coaxial rotors rotate in the same rotational direction, rotational speeds of the upper and lower rotors must be the same in order to maintain a fixed index angle (the angle by which the upper rotor azimuthally leads or lags the lower rotor when corotating in the same rotational directions). Experimental studies of such corotating coaxial rotors in Ref. 2 imposed equality of torques for the coaxial rotors.

In previous work Ref. 1 and Ref. 3, a generalized momentum theory for coaxial rotors with dissimilar diameters and rotational speeds, with torques constrained to be equal, derived a cubic equation that relates the induced velocities of the upper and lower rotors, $v_u$ and $v_l$, as follows:

$$\frac{1}{k_A}\left(1+\frac{k_{V_T}}{\sqrt{k_A}}\right)^2 v_l^3 + \left[3\left(1+\frac{k_{V_T}}{\sqrt{k_A}}\right)^2 - \left(\frac{\sqrt{k_A}}{k_{V_T}}+1\right)\frac{k_{V_T}^2}{k_A}\right]v_u v_l^2 + \left[3k_A\left(1+\frac{k_{V_T}}{\sqrt{k_A}}\right)^2 - 2\left(\frac{\sqrt{k_A}}{k_{V_T}}+1\right)\left(1+k_{V_T}\sqrt{k_A}\right)\frac{k_{V_T}}{\sqrt{k_A}}\right]v_u^2 v_l$$

$$+\left[\left(1+\frac{k_{V_T}}{\sqrt{k_A}}\right)^2 k_A^2 - \left(\frac{\sqrt{k_A}}{k_{V_T}}+1\right)\left(1+k_{V_T}\sqrt{k_A}\right)^2\right]v_u^3$$

$$= 0$$

where $k_A$ is the ratio of upper to lower rotor disc areas, and $k_{VT}$ is the corresponding ratio for tip speeds. Being primarily directed at counter rotating coaxial rotors, i.e. the coaxial rotors rotate in the opposite rotational directions, the constraint on equal torques in Refs. 1 and 3 equated the magnitudes of torques for the coaxial rotors.

Embodiments of the present invention seek to improve the aerodynamic optimization of the sizing and blade designs of corotating coaxial rotors.

SUMMARY

In accordance with a first aspect of the present invention, there is provided a method of generating a set of values for respective ones of a set of parameters used in determining rotor blade profiles for a corotating coaxial rotor system, the method comprising

establishing a ratio of respective desired thrusts of an upper rotor and a lower rotor of the corotating coaxial rotor system based on a desired performance of the corotating coaxial rotor system; and

determining the set of values of the set of parameters from the desired thrusts ratio based on an equal rotation speed condition between the upper rotor and the lower rotor of the corotating coaxial rotor system, wherein the set of parameters includes torques of the upper rotor and the lower rotor.

In accordance with a second aspect of the present invention, there is provided a system for generating a set of values for respective ones of a set of parameters used in determining rotor blade profiles for a corotating coaxial rotor system, the system comprising:

means for establishing a ratio of respective desired thrusts of an upper rotor and a lower rotor of the corotating coaxial rotor system based on a desired performance of the corotating coaxial rotor system; and

means for determining the set of values of the set of parameters from the desired thrusts ratio based on an equal rotation speed condition between the upper rotor and the lower rotor of the corotating coaxial rotor system, wherein the set of parameters includes torques of the upper rotor and the lower rotor.

BRIEF DESCRIPTION OF THE DRAWINGS

Embodiments of the invention will be better understood and readily apparent to one of ordinary skill in the art from the following written description, by way of example only, and in conjunction with the drawings, in which:

Figure 1 shows a schematic drawing illustrating optimal dissimilar rotor diameters of a corotating coaxial rotor system resulting from momentum theory optimization according to an example embodiment.

Figure 2 shows a schematic drawing illustrating aerodynamically optimized corotating dissimilar rotor blade geometries according to an example embodiment.

Figure 3 shows a schematic drawing illustrating a coaxial actuator discs model with dissimilar diameters for use in an example embodiment.

Figure 4 shows a flowchart illustrating a method of generating a set of values for respective ones of a set of parameters used in determining rotor blade profiles for a corotating coaxial rotor system, according to an example embodiment.

Figure 5 shows a schematic drawing illustrating a system for generating a set of values for respective ones of a set of parameters used in determining rotor blade profiles for a corotating coaxial rotor system, according to an example embodiment.

DETAILED DESCRIPTION

It has been recognized by the present inventor that for aerodynamic optimization of the sizing and blade designs of corotating coaxial rotors, there is no inherent requirement for the upper and lower rotors of a corotating pair of coaxial rotors to have the same torques. Rather, like the diameters of the upper and lower rotors, the torques of the upper and lower rotors can also be different for the aerodynamic optimization.

More specifically, in an example embodiment a generalized momentum theory has been developed for application in the aerodynamic optimization of the sizing and blade designs of corotating coaxial rotors with fixed index angles by imposing equality of rotational speeds, while lifting the constraint on equality of torques. Details of the generalized momentum theory are described as follows.

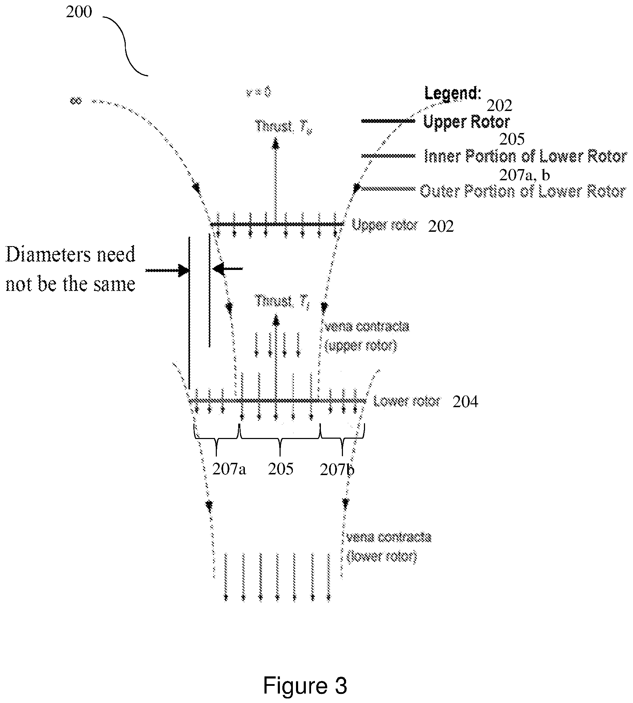

Figure 3 shows a schematic drawing illustrating a corotating coaxial rotor system 200 modeled with a pair of dissimilar rotors 202, 204. Figure 3 is used as a graphical example for describing the following method and it is understood that the method is not limited by Figure 3.

According to various embodiments, the set of parameters of the method may include the following ratios: Ratio of upper to lower rotor disc areas,

$$k_A = \frac{A_u}{A_l} \qquad\qquad (1)$$

Ratio of upper to lower rotor torques,

$$k_\tau = \frac{\tau_u}{\tau_l} \qquad\qquad (2)$$

According to various embodiments, by applying the conservation of mass, momentum and energy, the induced power of the upper rotor may be derived according to the following:
Mass flow rate, i.e. the flow of mass through the upper rotor, may be given by:

$$\dot{m}_u = \rho A_u v_u \qquad\qquad (3)$$

Accordingly, the momentum flux exiting the upper rotor may be given by:

$$\left(\rho A_u v_u\right)\cdot 2v_u = 2\rho A_u v_u^2 \qquad (4)$$

Since the momentum flux exiting the upper rotor may also be equal to the thrust $T_u$ of the upper rotor. Therefore, the thrust of the upper rotor may be expressed as:

$$T_u = 2\rho A_u v_u^2 \qquad (5)$$

Accordingly, the induced power $P_u$ of the upper rotor may be given by:

$$P_u = T_u v_u = 2\rho A_u v_u^3 \qquad (6)$$

According to various embodiments, by applying the conservation of mass, momentum and energy, the induced power of the lower rotor may be derived according to the following:
The mass flow through the lower rotor may have two contributions:

Mass flow due to the induced velocity $v_l$ $(= \rho A_l v_l)$

Mass flow passed into the lower rotor from the upper rotor $(= \rho A_u v_u)$

Total mass flow through the lower rotor may thus be

$$\dot{m}_l = \rho\left(A_u v_u + A_l v_l\right) \qquad (7)$$

Conservation of momentum may be applied to the lower rotor. The physical statement may be that (Thrust = Momentum flux downstream - Momentum flux upstream). The resulting equation for the thrust $T_l$ of the lower rotor may be

$$T_l = \dot{m}_l w_l - 2\rho A_u v_u^2$$

$$= \rho\left(A_u v_u + A_l v_l\right)w_l - 2\rho A_u v_u^2 \qquad (8)$$

Expressing the equation for the thrust $T_l$ in terms of $k_A$ (ratio of upper to lower rotor disc areas),

$$T_l = \rho A_l\left(k_A v_u + v_l\right)w_l - 2\rho A_u v_u^2 \qquad (9)$$

The lower rotor includes two regions. The first may be the inner region which lies in the fully developed slipstream of the upper rotor. The area of this region may be given by:

$$A_{l_i} = \frac{1}{2}A_u$$

The second may be the outer region which may be unaffected by the upper rotor. The area of this region may be given by:

$$A_{l_o} = A_l - \frac{1}{2}A_u$$

To determine the induced power of the lower rotor, the individual powers for each of the inner and outer parts may be determined and then summed up.
The induced power of the inner part of the lower rotor, where thrust $= T_{l_i}$, may be given by:

4

$$P_{l_i} = T_{l_i}\left(2v_u + v_l\right) \qquad (10)$$

where the $2v_u$ term is the contribution from the upper rotor.

In order to express $P_{l_i}$ in terms of area ratio $k_A$ and total lower rotor thrust $T_l$, thrust may be assumed to be weighted by area. This results in

$$T_{l_i} = \frac{A_{l_i}}{A_l}T_l$$

$$= \frac{\frac{1}{2}A_u}{A_l}T_l$$

$$= \frac{1}{2}k_A T_l \qquad (11)$$

Substituting back into Eq. (10),

$$P_{l_i} = \frac{1}{2}k_A\left(2v_u + v_l\right)T_l \qquad (12)$$

The induced power of the outer part of the lower rotor, where thrust = $T_{l_o}$, may be given by:

$$P_{l_o} = T_{l_o}v_l \qquad (13)$$

In order to express $P_{l_o}$ in terms of area ratio $k_A$ and total lower rotor thrust $T_l$, thrust may again be assumed to be weighted by area. This results in

$$T_{l_o} = \frac{A_{l_o}}{A_l}T_l$$

$$= \frac{1}{A_l}\left(A_l - \frac{1}{2}A_u\right)T_l$$

$$= \left(1 - \frac{1}{2}k_A\right)T_l \qquad (14)$$

Substituting back into Eq. (13),

$$P_{l_o} = \left(1 - \frac{1}{2}k_A\right)T_l v_l \qquad (15)$$

Summing the contributions of the inner and outer regions, the total induced power of the lower rotor may be given by:

$$P_l = P_{l_i} + P_{l_o}$$

Accordingly, by substituting from Eqs. (12) and (15), and re-arranging,

$$P_l = T_l\left(k_A v_u + v_l\right) \qquad (16)$$

$P_l$ may also be given by the change in kinetic energy from upstream of the lower rotor to far downstream:

$$P_l = \frac{1}{2}\rho\left(A_u v_u + A_l v_l\right)w_l^2 - P_u \qquad (17)$$

According to various embodiments, the equality of rotational speeds condition may be expressed according to the following:

From Power = Torque x Rotational Speed, the ratio of upper to lower rotor powers may be given by:

$$\frac{P_l}{P_u} = \frac{\tau_l \Omega_l}{\tau_u \Omega_u} \qquad (18)$$

In the equal rotational speeds condition, $W_l = W_u$. Hence, the ratio of powers may become

$$\frac{P_l}{P_u} = \frac{\tau_l}{\tau_u} \qquad (19)$$

Substituting using $k_\tau$ results in the following condition for equality of rotational speeds:

$$P_l = \frac{1}{k_\tau}P_u \qquad (20)$$

Substituting from Eqs. (6) and (16), the condition for equality of rotational speeds may be expressed as

$$T_l\left(k_A v_u + v_l\right) = \frac{1}{k_\tau}T_u v_u \qquad (21)$$

According to various embodiments, a cubic equation which relates to the induced velocities through the upper and lower rotors, $v_u$ and $v_l$ respectively, may be developed according to the following:

Multiplying Eq. (9) by $v_u(k_A v_u + v_l)$ and re-arranging,

$$P_l\left[\left(1 + k_\tau k_A\right)v_u + k_\tau v_l\right] = \rho A_l\left(k_A v_u + v_l\right)^2 \cdot \left(v_u w_l\right) \qquad (22)$$

Substituting the equality of rotational speeds Eq. (20) into the kinetic energy equation for $P_l$ (Eq. (17)) and re-arranging,

$$P_l\left(1 + k_\tau\right) = \frac{1}{2}\rho A_l\left(k_A v_u + v_l\right)w_l^2 \qquad (23)$$

Eq. (23) divided by Eq. (22), and re-arranging,

$$w_l = 2(1 + k_\tau)v_u \frac{k_A v_u + v_l}{[(1 + k_\tau k_A)v_u + k_\tau v_l]} \tag{24}$$

Substituting the kinetic energy forms for power, Eqs. (6) and (17), into the equality of rotational speeds Eq. (20),

$$\frac{1}{2}\rho(A_u v_u + A_l v_l)w_l^2 - 2\rho A_u v_u^3 = \frac{1}{k_\tau} 2\rho A_u v_u^3 \tag{25}$$

After re-arranging,

$$\left(\frac{1}{k_\tau} + 1\right)v_u^3 = \frac{w_l^2}{4k_A}(k_A v_u + v_l) \tag{26}$$

Substituting Eq. (24) for $w_l$ into Eq. (26), and after considerable re-arrangement, the cubic equation for the developed generalized momentum theory according to an example embodiment becomes

$$\frac{1}{k_A}(1 + k_\tau)^2 v_l^3 + \left[3(1 + k_\tau)^2 - \left(\frac{1}{k_\tau} + 1\right)k_\tau^2\right]v_u v_l^2$$

$$+ \left[3k_A(1 + k_\tau)^2 - 2\left(\frac{1}{k_\tau} + 1\right)(1 + k_\tau k_A)k_\tau\right]v_u^2 v_l$$

$$+ \left[(1 + k_\tau)^2 k_A^2 - \left(\frac{1}{k_\tau} + 1\right)(1 + k_\tau k_A)^2\right]v_u^3$$

$$= 0 \tag{27}$$

where $v_u$ and $v_l$ are the induced velocities of the upper and lower rotors, respectively, $k_A$ is the ratio of upper to lower rotor disc areas, and $k_\tau$ is the corresponding ratio for torques.

According to various embodiments, an equation for the power per unit thrust of the corotating coaxial system may be determined from the ratio of upper to lower rotor thrusts based on the equality of rotational speeds condition according to the following:

In general, for a given set of $k_A$, $k_\tau$ and either of $v_u$ or $v_l$, the cubic equation (27) may be solved for the other induced velocity.

The specified induced velocity may be determined from the selection of disc loading, which is usually decided upon during the initial stages of the conceptualizing of the corotating coaxial rotor system. In the present example, the selected disc loading may be for the upper rotor, denoted by $(DL)_u$. The specified induced velocity of the upper rotor may thus be determined from

$$v_u = \sqrt{\frac{(DL)_u}{2\rho}} \tag{28}$$

The cubic equation (27) may now be solved for the induced velocity of the lower rotor $v_l$.

The ratio of lower to upper rotor induced velocities may be denoted as $k_v$

$$k_v \equiv \frac{v_l}{v_u} \tag{29}$$

From equality of rotational speeds, Eq. (21), which is reproduced as follows:

$$T_l \left( k_A v_u + v_l \right) = \frac{1}{k_\tau} T_u v_u$$

The ratio of upper to lower rotor thrusts, $k_T$, may be determined as

$$k_T \equiv \frac{T_u}{T_l} = k_\tau \left( k_A + k_v \right) \tag{30}$$

The upper rotor thrust, as a fraction of the total corotating coaxial system thrust, may thus be

$$k_{Ttot} \equiv \frac{T_u}{T_{tot}} = \frac{k_T}{k_T + 1} \tag{31}$$

The total corotating coaxial system induced power may be given by:

$$P_{tot} = P_u + P_l \tag{32}$$

Substituting the equality of rotational speeds Eq. (20) for $P_l$,

$$P_{tot} = \left( 1 + \frac{1}{k_\tau} \right) P_u \tag{33}$$

Knowing that $P_u = T_u v_u$, and substituting Eqs. (31) and (28), the power per unit thrust of the corotating coaxial rotor system may be determined as follows:

$$\frac{P_{tot}}{T_{tot}} = \left( 1 + \frac{1}{k_\tau} \right) \cdot k_{Ttot} \cdot \sqrt{\frac{(DL)_u}{2\rho}} \tag{34}$$

It should be noted that the Eq. (34) for $P_{tot} / T_{tot}$ is a function of three independent variables $k_A$, $k_\tau$ and $(DL)_u$. These three variables will be the variables in the optimization to be described below, which seeks to minimize $P_{tot} / T_{tot}$, a condition which represents best hovering efficiency.

According to various embodiments, the power per unit thrust of the corotating coaxial rotor system may be optimized according to the following:

The objective of the optimization is to determine the combination of area ratio $k_A$, torque ratio $k_\tau$ and upper rotor disc loading $(DL)_u$ which maximizes the hovering efficiency (achieved by minimizing the power per unit thrust $P_{tot} / T_{tot}$) as determined by the generalized momentum theory representation of corotating coaxial rotor systems.

The optimization may be subjected to fulfilling two additional operational requirements:

- Specified amount of thrust to be generated within a specified geometric footprint.
- Specified thrust-sharing percentage between the upper and lower rotors. In the present example embodiment, this has been specified as 50-50 for consistency with Ref. 2. In other embodiments, this may be specified for other reasons including but not limited to: in the scenario that the corotating coaxial rotor system is one of a number of coaxial pairs in a multi-rotor VTOL UAV, safety requirements for recovery from failure of one of the two motors driving the two rotors in a coaxial pair. In this scenario, it is desirable for total thrust to be shared between the upper and lower rotors, such that each rotor is able to compensate for the loss of thrust in the event of failure of the other rotor.

These operational requirements may be quantified as:

- Specified $T_{tot,spec}$ (i.e. desired total thrust)
- The footprint is specified through the disc area of the lower rotor, $A_{l,spec}$ (i.e. maximum rotor diameter)

- Specified $k_{Ttot,spec}$

Optimization with the quantified operational requirements may be solved by the method of calculus of variations using Lagrange multipliers. Two constraint equations may be defined. The first is in relation to the specified thrust and footprint. The second is in relation to the specified $k_{Ttot,spec}$.

By definition of disc loading,

$$(DL)_u = \frac{T_u}{A_u}$$

$$= \frac{k_{Ttot} T_{tot,spec}}{k_A A_{l,spec}} \tag{35}$$

Hence, the first constraint equation may be given by:

$$(DL)_u - \frac{k_{Ttot} T_{tot,spec}}{k_A A_{l,spec}} = 0 \tag{36}$$

The above Eq. (36) may be denoted in terms of a function $f_1$.

$$f_1\big[(DL)_u, k_A, k_\tau\big] = 0 \tag{37}$$

From the specified thrust ratio,

$$k_{Ttot} = k_{Ttot,spec} \tag{38}$$

Hence, the second constraint equation may be given by:

$$k_{Ttot} - k_{Ttot,spec} = 0 \tag{39}$$

The above Eq. (39) may be denoted in terms of a function $f_2$.

$$f_2\big[(DL)_u, k_A, k_\tau\big] = 0 \tag{40}$$

An auxiliary function H may now be set up as

$$H = \frac{P_{tot}}{T_{tot}} + \lambda_1 f_1 + \lambda_2 f_2 \tag{41}$$

where $\lambda_1$ and $\lambda_2$ are the Lagrange multipliers.

There may thus be 5 independent nonlinear equations to be solved for 5 variables: $k_A$, $k_t$, $(DL)_u$, $\lambda_1$ and $\lambda_2$. The 5 equations are:

$$\frac{\partial H}{\partial k_A} = 0 \tag{42}$$

$$\frac{\partial H}{\partial k_\tau} = 0 \tag{43}$$

$$\frac{\partial H}{\partial (DL)_u} = 0 \tag{44}$$

$$f_1\left[(DL)_u, k_A, k_\tau\right] = 0 \tag{45}$$

$$f_2\left[(DL)_u, k_A, k_\tau\right] = 0 \tag{46}$$

The equations may be coded and solved numerically in MATLAB®. The equation solver may also be developed in MATLAB®, and may include

- Genetic Algorithm (GA) technique for initial exploration of the design space, leading to the vicinity of the optimum point; or
- Newton-Raphson technique, initialized using the vicinity point determined by GA, for final convergence, as it is well-known that this technique has very good convergence properties.

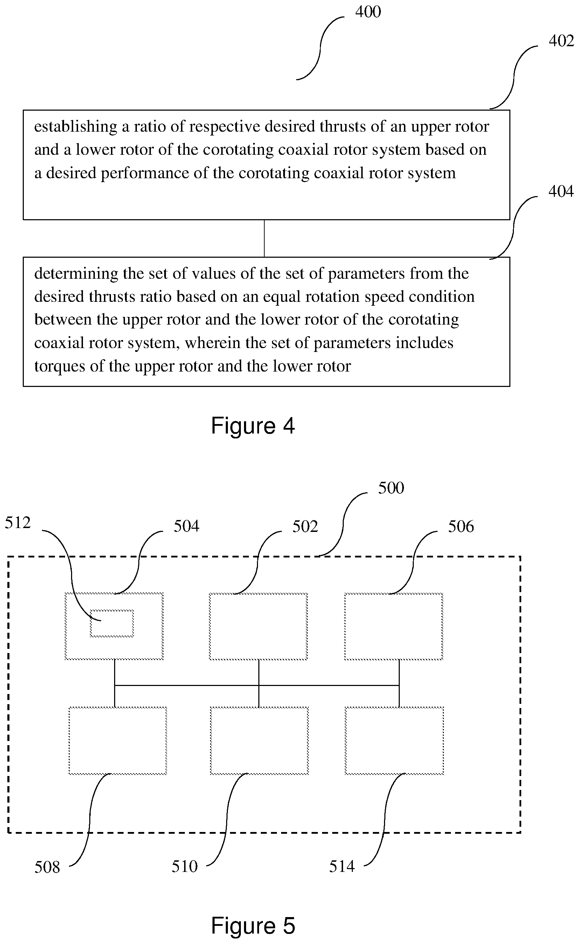

In an example design application, the developed generalized momentum theory according to an example embodiment is applied in the aerodynamic optimization of the sizing and blade designs of corotating coaxial rotors in conjunction with a calculus of variations, Lagrange multiplier optimization to determine the optimum combination of $k_A$ and $k_\tau$ which achieve a specified total thrust at minimum total induced power of the corotating pair of coaxial rotors, while maintaining equal rotational speeds for the upper and lower rotors. The optimization according to the example embodiment using the developed generalized momentum theory is demonstrated in a design example taken from Ref. 2. The objective was to optimize the design of the corotating rotors of Ref. 2 for the intermediate total thrust condition of 366.3N (37.3 kgf or 82.3 lbf), which corresponds to $C_T/\sigma$ = 0.06 for each of the upper and lower rotors in Fig. 5(a) of Ref. 2.

The versatility of the developed generalized momentum theory for application in the aerodynamic optimization of the sizing and blade designs of corotating coaxial rotors according to the example embodiment, which has no constraints on similar diameters and torques, and which also allows thrust-sharing percentages between the upper and lower rotors to be independently specified (50-50 was used in the example design case, corresponding to $k_{Ttot,spec}$ = 0.5, for consistency with Ref. 2), can advantageously handle this design case. The problem statement for this momentum theory optimization example was defined as: To determine the ratios of rotor disc areas $k_A$ and torques $k_\tau$ of the upper and lower rotors of a corotating pair that minimizes total induced power to produce the design total thrust, or $T_{tot,spec}$, of 366.3N (37.3 kgf or 82.3 lbf) at static hover, subject to the conditions,

  1) Equal rotational speeds for the upper and lower rotors (1200rpm from Ref. 2), and

  2) Maximum geometric footprint for rotor diameter = 2.032m (80in), also from Ref. 2. This corresponded to $A_{l,spec}$ = 3.243m$^2$ (5026.55in$^2$)

It is noted that 1200rpm was used in the design example for consistency with Ref. (2) as an input to the optimization. In other example embodiments, the rotational speed may, for example, be specified for reasons including but not limited to achieving desired rotor tip Mach numbers. e.g. low subsonic Mach numbers for achieving low noise levels.

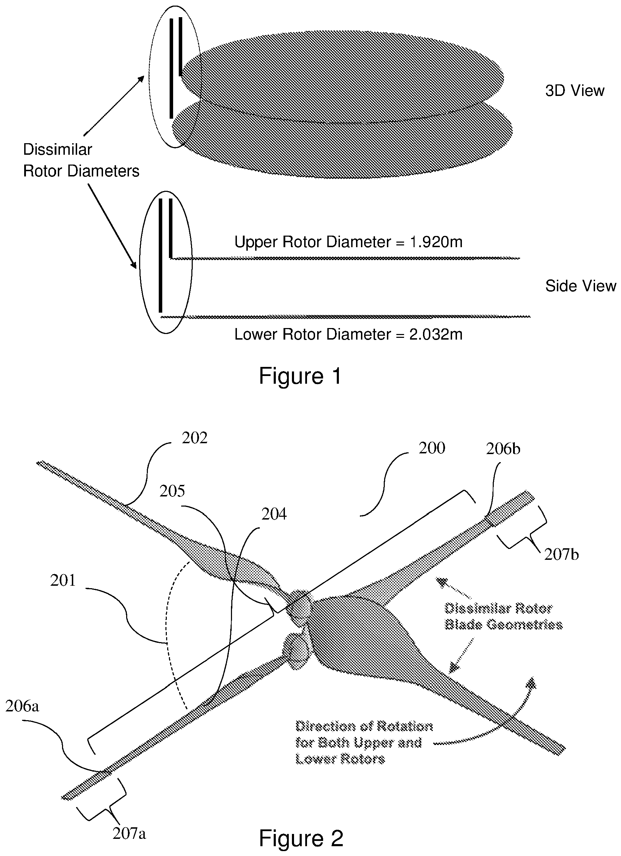

The results which achieved the required total thrust at minimum total induced power were $k_A$ = 0.8927 and $k_\tau$ = 0.6845. The dissimilar pair of rotor disc areas and diameters is illustrated in Fig. 1. The key results are summarized as follows:

- Optimized minimum total induced power: 2323.6 W (3.12 hp)
- Upper rotor diameter and induced power: 1.920m (75.6in), 944.2 W (1.27 hp)
- Lower rotor diameter and induced power: 2.032m (80in), 1379.4 W (1.85 hp)

The dissimilar rotor diameters and torques resulting from the aerodynamic optimization of the sizing and blade designs of corotating coaxial rotors according to the example embodiment can be used as inputs for the next level of detail: aerodynamic optimization resulting in the details of the geometries of the dissimilar upper and lower rotor blades. This was done using the Blade Element Momentum Theory (BEMT) method of Ref. 5. Specifically, the method of Ref. 5 contains the following generalizations A) to E):

A) Allows for dissimilar rotor blade diameters as specified inputs.
However, the BEMT method of Ref. 5 does not size or determine what these parameters should be. According to an example embodiment of the present invention, these parameters were sized beforehand applying the developed generalized momentum theory, and then used as inputs to the BEMT method of Ref. 5.
B) A constraint equation that equates the torques of the upper and lower rotors.
According to an example embodiment of the present invention, this equation is modified to allow for dissimilar rotor torques by applying the factor $k_\tau$ to the lower rotor torque in a newly developed BEMT method, as expressed by Eq. (47):

$$C_{P_i}^u + C_{P_0}^u = k_\tau \left(C_{P_i}^l + C_{P_0}^l\right)\frac{\zeta_R^5}{\zeta_\Omega^2} \tag{47}$$

where $C_{P_i}$ and $C_{P_0}$ are the induced and profile power coefficients, with the superscripts $u$ or $l$ denoting upper or lower rotor respectively. $\xi_R$ is the ratio of lower to upper rotor radii and $\xi_\Omega$ is the ratio of upper to lower rotor rotational speeds.
C) Interference inflow to each rotor is more rigorously determined via the Biot-Savart vortex filament model.
D) Allows the lower rotor to have dissimilar induced inflows for its inner and outer regions.
E) Thrust distribution over the lower rotor need not be area-weighted over the rotor disc plane.

The index angle can be chosen to provide additional benefits in aeroacoustics and/or aerodynamics. From an aeroacoustics consideration, corotating rotors inherently do not generate the noise source of pressure impulses of counterrotating rotors when the upper and lower rotor blades cross each other as they rotate in opposite directions, as described in Refs. 6 and 7. Furthermore, the computations of Ref. 8 indicate that, when each of the upper and lower rotors has two blades, index angles in the region of 90° produce destructive interferences between the acoustic waves from the corotating upper and lower rotor blades, which weakens the resulting aerodynamic noise. In consideration of these findings, an index angle of 90° (see numeral 201 in Figure 2) is tentatively specified as a geometric parameter according to a nonlimiting example embodiment.

The resulting corotating pair 200 comprising dissimilar upper and lower rotor blades 202, 204, respectively, is illustrated in Fig. 2, with the chord distribution, the twist distribution, the pitch angle distribution, and the airfoil distribution etc. for the rotor blades 202, 204 profiles, using the BEMT method according to an example embodiment.

It can be seen in Fig. 2 that the lower rotor 204 has a kink 206a, b at the outboard region. This marks the boundary of the downwash from the upper rotor 202 where the downwash contacts with the lower rotor 204. For the region 205 inboard of this kink 206a, b, this is immersed in the downwash of the upper rotor 202, as illustrated in Fig. 3, and generates thrust less efficiently due to this interference with the upper rotor. The optimizer according to the example embodiment assigns the inboard region 205 to generate less thrust as compared to the outboard region 207a, b, as a means to reduce the amount of power expended on the inherently less efficient inboard region 205. The step change in thrust between the inboard region 205 immersed in the downwash of the upper rotor 202 and the outboard region 207a, b outside of the downwash results in a step change in (optimized) blade chord distribution. Accordingly, the blade profile for the lower rotor 204 contains the kink 206a, b that reflects this step change.

The hovering efficiency is assessed by defining Figure of Merit *(FM)* as

$$FM = \frac{\textit{Ideal Power from Generalized Coaxial Momentum Theory}}{\textit{Actual Power}}$$

A pre-optimization value of *FM* using the above definition was determined from experimental measurements of the corotating rotors of Ref 2. As the corotating rotors of Ref. 2 were of equal diameters, rotational speeds and torques, the ideal power can be determined from an earlier momentum theory of Ref. 4, which gives the induced power coefficient as

$$C_{P_i} = 1.2657 \frac{C_{T_l}^{3/2}}{\sqrt{2}} \left[ \left( \frac{C_{T_u}}{C_{T_l}} \right)^{3/2} + 1 \right]$$

where $C_{P_i}$ is the induced power coefficient of the coaxial pair, $C_{T_u}$ and $C_{T_l}$ are the thrust coefficients of the upper and lower rotor respectively.

The *FM* for the corotating rotors of Ref. 2, as well as the *FM* after optimization according to the example embodiment of the present invention, are summarized in Table 1. The disk loadings are approximately equal, thus allowing for comparisons of *FM* to be made. It can be seen that in the example embodiment of the present invention, despite negative biasing from operating at lower Reynolds numbers, the optimization is still able to achieve a *FM* which is substantially higher than in Ref. 2.

Table 1. Comparison of Figure of Merit *(FM)*

| | Disk Loading (lb/ft$^2$ or N/m$^2$) | | | | Reynolds Number | | |
| | Upper Rotor | | Lower Rotor | | Upper Rotor | Lower Rotor | *FM* |
| | English | Metric | English | Metric | | | |
| Uehara *et al*., 2020 (Ref. 2) | 1.242 | 59.476 | 1.117 | 53.483 | 490,000 (at 0.75*R*) | 490,000 (at 0.75*R*) | 0.50 |
| Present | 1.179 | 56.434 | 1.307 | 62.580 | 260,000 (Uniform) | 180,000 (Uniform for Inner Portion) / 270,000 (Uniform for Outer Portion) | 0.73 |

It is noted that in a different example embodiment, the index angle may be computed as part of the optimization, rather than being pre-specified. Also, in a different example embodiment aerodynamic considerations may be used in pre-specifying or in optimizing the index angle. For example, Ref. 2 reports that much smaller index angles in the region of $10^0$ can yield benefits in additional power loading.

Also, the number of blades of the upper and lower rotors may be different from two, and/or the upper and lower rotors may have different numbers of blades, e.g upper rotor two blades, lower rotor three blades etc., in different example embodiments

Figure 4 shows a flowchart 400 illustrating a method of generating a set of values for respective ones of a set of parameters used in determining rotor blade profiles for a corotating coaxial rotor system, according to an example embodiment. At step 402, a ratio of respective desired thrusts of an upper rotor and a lower rotor of the corotating coaxial rotor system is established based on a desired performance of the corotating coaxial rotor system. At step 404, the set of values of the set of parameters is determined from the desired thrusts ratio based on an equal rotation speed condition between the upper rotor and the lower rotor of the corotating coaxial rotor system, wherein the set of parameters includes torques of the upper rotor and the lower rotor.

The method may comprise establishing a maximum rotor diameter for the corotating coaxial rotor system prior to determining the set of values for the set of parameters and determining the set of values for the set of parameters comprises using the maximum rotor diameter.

The method may comprise establishing a desired total thrust for the corotating coaxial rotor system prior to determining the set of values for the set of parameters and determining the set of values for the set of parameters comprises using the desired total thrust.

The method may comprise choosing an index angle of the corotating coaxial rotor system prior to determining the set of values for the set of parameters.

Determining the set of values for the set of parameters may comprise determining an index angle of the corotating coaxial rotor system.

Determining the set of values for the set of parameters may comprise optimizing the set of values based on minimizing total induced power for static hover.

The set of parameters may include a ratio of respective rotor disc areas of the upper rotor and the lower rotor of the corotating coaxial rotor system. The set of parameters may include upper rotor diameter and lower rotor diameter.

The method may comprise assigning an inbound region of the lower rotor from a boundary of downwash from the upper rotor less thrust compared to an outboard region of the lower rotor from the boundary of downwash from the upper rotor. The set of parameters include a step change in chord of the lower rotor.

The ratio of respective desired thrusts of an upper rotor and a lower rotor of the corotating coaxial rotor system may be 1 : 1.

The torques of the upper rotor and the lower rotor may be included in the set of parameters as a ratio of the torque of the upper rotor and the torque of the lower rotor.

Figure 5 shows a schematic drawing illustrating a system 500 for generating a set of values for respective ones of a set of parameters used in determining rotor blade profiles for a corotating coaxial rotor system, according to an example embodiment. The system 500 comprises means for establishing a ratio of respective desired thrusts, 502, of an upper rotor and a lower rotor of the corotating coaxial rotor system based on a desired performance of the corotating coaxial rotor system; and means for determining the set of values of the set of parameters, 504, from the desired thrusts ratio based on an equal rotation speed condition between the upper rotor and the lower rotor of the corotating coaxial rotor system, wherein the set of parameters includes torques of the upper rotor and the lower rotor.

The system may comprise means for establishing a maximum rotor diameter, 506, for the corotating coaxial rotor system prior to determining the set of values for the set of parameters and determining the set of values for the set of parameters comprises using the maximum rotor diameter.

The system may comprise means for establishing a desired total thrust, 508, for the corotating coaxial rotor system prior to determining the set of values for the set of parameters and determining the set of values for the set of parameters comprises using the desired total thrust.

The system may comprise means for choosing an index angle, 510, of the corotating coaxial rotor system prior to determining the set of values for the set of parameters.

The means for determining the set of values for the set of parameters, 504, may be configured for determining an index angle of the corotating coaxial rotor system.

The means for determining the set of values for the set of parameters, 504, may comprise means for optimizing the set of values, 512, based on minimizing total induced power for static hover. The set of parameters may include a ratio of respective rotor disc areas of the upper rotor and the lower rotor of the corotating coaxial rotor system. The set of parameters may include upper rotor diameter and lower rotor diameter.

The system may comprise means for assigning, 514, an inbound region of the lower rotor from a boundary of downwash from the upper rotor less thrust compared to an outboard region of the lower rotor from the boundary of downwash from the upper rotor. The set of parameters may include a step change in chord of the lower rotor.

The ratio of respective desired thrusts of an upper rotor and a lower rotor of the corotating coaxial rotor system may be 1 : 1.

The torques of the upper rotor and the lower rotor may be included in the set of parameters as a ratio of the torque of the upper rotor and the torque of the lower rotor.

Aspects of the systems and methods described herein such as the aerodynamic optimization of the sizing and blade designs of corotating coaxial rotors and the aerodynamic optimization resulting in the details of the geometries of the dissimilar upper and lower rotor blades, for example the means for establishing a ratio of respective desired thrusts, 502, the means for determining the set of values of the set of parameters, 504, the means for establishing a maximum rotor diameter, 506, the means for establishing a desired total thrust, 508, the means for choosing an index angle, 510, the means for optimizing the set of values, 512, and the means for assigning, 514, may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the system include: microcontrollers with memory (such as electronically erasable programmable read only memory (EEPROM)), embedded microprocessors, firmware, software, etc. Furthermore, aspects of the system may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

The systems and methods are not limited by the disclosure, but instead the scope of the systems and methods is to be determined entirely by the claims.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

**REFERENCES**

Ref. 1 - Chan, K. I., "Method and System for Generating a Set of Values for Respective Ones of a Set of Parameters Used in Determining Rotor Blade Profiles for a Coaxial Rotor System," International Patent Application Number PCT/SG2015/050489, December 2015

Ref. 2 - Uehara, D., Sirohi, J. and Bhagwat, M. J., "Hover Performance of Corotating and Counterrotating Coaxial Rotors," Journal of the American Helicopter Society, Vol. 65, (1), Jan. 2020, pp. 012006. doi: 10.4050/JAHS.65.012006

Ref. 3 - Chan, K. I., "Generalized Aerodynamic Optimization of Hovering Coaxial Rotor Blades," Journal of the American Helicopter Society, Vol. 64, (2), Apr. 2019, pp. 022006. doi: 1 0.4050/JAHS.64.022006

Ref. 4 - Leishman, J. G. and Syal, M., "Figure of Merit Definition for Coaxial Rotors," Journal of the American Helicopter Society, Vol. 53, (3), Jul. 2008, pp. 290-300. doi: 10.4050/JAHS.53.290

Ref. 5 - Rand, O. and Khromov, V., "Aerodynamic Optimization of Coaxial Rotor in Hover and Axial Flight," 27th International Congress of the Aeronautical Sciences, Nice, France, September 19-24, 2010.

Ref. 6 - Lakshminarayan, V. K. and Baeder, J. D., "High-Resolution Computational Investigation of Trimmed Coaxial Rotor Aerodynamics in Hover," Journal of the American Helicopter Society, Vol. 54, (4), Oct. 2009, pp. 042008. doi: 10.4050/JAHS.54.042008

Ref. 7 - Schatzman, N. L., "Aerodynamics and Aeroacoustic Sources of a Coaxial Rotor," PhD Thesis, Georgia Institute of Technology, May 2018

Ref. 8 - Shubham, "Computational Aeroacoustic Investigation of Co-rotating Rotors for Urban Air Mobility," Masters Thesis, Delft University of Technology, Jan. 2020

**Claims**

1. A method of generating a set of values for respective ones of a set of parameters used in determining rotor blade profiles for a corotating coaxial rotor system, the method comprising:

    establishing a ratio of respective desired thrusts of an upper rotor and a lower rotor of the corotating coaxial rotor system based on a desired performance of the corotating coaxial rotor system; and
    determining the set of values of the set of parameters from the desired thrusts ratio based on an equal rotation speed condition between the upper rotor and the lower rotor of the corotating coaxial rotor system, wherein the set of parameters includes torques of the upper rotor and the lower rotor.

2. The method of claim 1, comprising establishing a maximum rotor diameter for the corotating coaxial rotor system prior to determining the set of values for the set of parameters and determining the set of values for the set of parameters comprises using the maximum rotor diameter.

3. The method of claims 1 or 2, comprising establishing a desired total thrust for the corotating coaxial rotor system prior to determining the set of values for the set of parameters and determining the set of values for the set of parameters comprises using the desired total thrust.

4. The method of any one of claims 1 to 3, comprising choosing an index angle of the corotating coaxial rotor system prior to determining the set of values for the set of parameters; or wherein determining the set of values for the set of parameters comprises determining an index angle of the corotating coaxial rotor system.

5. The method of any of claims 1 to 4, wherein determining the set of values for the set of parameters comprises optimizing the set of values based on minimizing total induced power for static hover.

6. The method of any of claims 1 to 5, wherein the set of parameters include a ratio of respective rotor disc areas of the upper rotor and the lower rotor of the corotating coaxial rotor system; and optionally wherein the set of parameters include upper rotor diameter and lower rotor diameter.

7. The method of any of claims 1 to 6, comprising assigning an inbound region of the lower rotor from a boundary of downwash from the upper rotor less thrust compared to an outboard region of the lower rotor from the boundary of downwash from the upper rotor; and optionally wherein the set of parameters include a step change in chord of the lower rotor.

8. The method of any of claims 1 to 7, wherein the ratio of respective desired thrusts of an upper rotor and a lower rotor of the corotating coaxial rotor system is 1 : 1; and/or wherein the torques of the upper rotor and the lower rotor are included in the set of parameters as a ratio of the torque of the upper rotor and the torque of the lower rotor.

9. A system for generating a set of values for respective ones of a set of parameters used in determining rotor blade profiles for a corotating coaxial rotor system, the system comprising:

   means for establishing a ratio of respective desired thrusts of an upper rotor and a lower rotor of the corotating coaxial rotor system based on a desired performance of the corotating coaxial rotor system; and
   means for determining the set of values of the set of parameters from the desired thrusts ratio based on an equal rotation speed condition between the upper rotor and the lower rotor of the corotating coaxial rotor system, wherein the set of parameters includes torques of the upper rotor and the lower rotor.

10. The system of claim 9, comprising means for establishing a maximum rotor diameter for the corotating coaxial rotor system prior to determining the set of values for the set of parameters and determining the set of values for the set of parameters comprises using the maximum rotor diameter; and/or comprising means for establishing a desired total thrust for the corotating coaxial rotor system prior to determining the set of values for the set of parameters and determining the set of values for the set of parameters comprises using the desired total thrust.

11. The system of any one of claims 9 to 10, comprising means for choosing an index angle of the corotating coaxial rotor system prior to determining the set of values for the set of parameters; or wherein the means for determining the set of values for the set of parameters is configured for determining an index angle of the corotating coaxial rotor system.

12. The system of any of claims 9 to 11, wherein the means for determining the set of values for the set of parameters comprises means for optimizing the set of values based on minimizing total induced power for static hover.

13. The system of any of claims 9 to 12, wherein the set of parameters include a ratio of respective rotor disc areas of the upper rotor and the lower rotor of the corotating coaxial rotor system; and optionally wherein the set of parameters include upper rotor diameter and lower rotor diameter.

14. The system of any of claims 9 to 13, comprising means for assigning an inbound region of the lower rotor from a boundary of downwash from the upper rotor less thrust compared to an outboard region of the lower rotor from the boundary of downwash from the upper rotor; and optionally wherein the set of parameters include a step change in chord of the lower rotor.

15. The system of any of claims 9 to 14, wherein the ratio of respective desired thrusts of an upper rotor and a lower rotor of the corotating coaxial rotor system is 1 : 1, and/or wherein the torques of the upper rotor and the lower rotor are included in the set of parameters as a ratio of the torque of the upper rotor and the torque of the lower rotor.

**Patentansprüche**

1. Ein Verfahren zum Erzeugen eines Wertesatzes für jeweilige Parameter eines Parametersatzes, der zum Bestimmen von Rotorblattprofilen für ein mitrotierendes koaxiales Rotorsystem verwendet wird, wobei das Verfahren aufweist:

   Festlegen eines Verhältnisses der jeweiligen gewünschten Schübe eines oberen Rotors und eines unteren Rotors des mitrotierenden koaxialen Rotorsystems basierend auf einer gewünschten Leistung des mitrotierenden koaxialen Rotorsystems; und
   Bestimmen des Wertesatzes des Parametersatzes aus dem gewünschten Schubverhältnis basierend auf einer Bedingung gleicher Rotationsgeschwindigkeit zwischen dem oberen Rotor und dem unteren Rotor des mitrotierenden koaxialen Rotorsystems, wobei der Parametersatz Drehmomente des oberen Rotors und des unteren Rotors aufweist.

2. Das Verfahren gemäß Anspruch 1, aufweisend das Festlegen eines maximalen Rotordurchmessers für das mitrotierende koaxiale Rotorsystem vor dem Bestimmen des Wertesatzes für den Parametersatz, und das Bestimmen des Wertesatzes für den Parametersatz weist die Verwendung des maximalen Rotordurchmessers auf.

3. Das Verfahren gemäß Anspruch 1 oder 2, aufweisend das Festlegen eines gewünschten Gesamtschubs für das mitrotierende koaxiale Rotorsystem vor dem Bestimmen des Wertesatzes für den Parametersatz, und das Bestimmen des Wertesatzes für den Parametersatz weist das Verwenden des gewünschten Gesamtschubs auf.

4. Das Verfahren gemäß einem der Ansprüche 1 bis 3, aufweisend das Wählen eines Indexwinkels des mitrotierenden koaxialen Rotorsystems vor dem Bestimmen des Wertesatzes für den Parametersatz; oder wobei das Bestimmen des Wertesatzes für den Parametersatz das Bestimmen eines Indexwinkels des mitrotierenden koaxialen Rotorsystems aufweist.

5. Das Verfahren gemäß einem der Ansprüche 1 bis 4, wobei das Bestimmen des Wertesatzes für den Parametersatz das Optimieren des Wertesatzes basierend auf der Minimierung der gesamten induzierten Leistung für den statischen Schwebeflug aufweist.

6. Das Verfahren gemäß einem der Ansprüche 1 bis 5, wobei der Parametersatz ein Verhältnis der jeweiligen Rotorscheibenflächen des oberen Rotors und des unteren Rotors des mitrotierenden koaxialen Rotorsystems aufweist; und wobei der Parametersatz optional den oberen Rotordurchmesser und den unteren Rotordurchmesser aufweist.

7. Das Verfahren nach einem der Ansprüche 1 bis 6, aufweisend das Zuweisen eines inneren Bereichs des unteren Rotors von einer Abwindgrenze des oberen Rotors aus mit weniger Schub im Vergleich zu einem äußeren Bereich des unteren Rotors von der Abwindgrenze des oberen Rotors aus nach außen, und wobei der Parametersatz wahlweise eine stufenweise Änderung der Sehne des unteren Rotors aufweist.

8. Verfahren nach einem der Ansprüche 1 bis 7, wobei das Verhältnis der jeweiligen gewünschten Schübe eines oberen Rotors und eines unteren Rotors des mitrotierenden koaxialen Rotorsystems 1:1 beträgt; und/oder wobei die Drehmomente des oberen Rotors und des unteren Rotors in den Parametersatz als Verhältnis des Drehmoments des oberen Rotors und des Drehmoments des unteren Rotors einbezogen werden.

9. Eine Vorrichtung zum Erzeugen eines Wertesatzes für die jeweiligen Werte eines Parametersatzes, der zum Bestimmen von Rotorblattprofilen für ein mitrotierendes koaxiales Rotorsystem verwendet wird, wobei die Vorrichtung Folgendes aufweist:

Mittel zum Festlegen eines Verhältnisses der jeweiligen gewünschten Schübe eines oberen Rotors und eines unteren Rotors des mitrotierenden koaxialen Rotorsystems basierend auf einer gewünschten Leistung des mitrotierenden koaxialen Rotorsystems; und
Mittel zum Bestimmen des Wertesatzes des Parametersatzes aus dem gewünschten Schubverhältnis basierend auf einer Bedingung gleicher Rotationsgeschwindigkeit zwischen dem oberen Rotor und dem unteren Rotor des mitrotierenden koaxialen Rotorsystems, wobei der Parametersatz Drehmomente des oberen Rotors und des unteren Rotors aufweist.

10. Die Vorrichtung gemäß Anspruch 9, aufweisend Mittel zum Festlegen eines maximalen Rotordurchmessers für das mitrotierende koaxiale Rotorsystem vor dem Bestimmen des Wertesatzes für den Parametersatz, wobei das Bestimmen des Wertesatzes für den Parametersatz die Verwendung des maximalen Rotordurchmessers aufweist; und/oder aufweisend Mittel zum Festlegen eines gewünschten Gesamtschubs für das mitrotierende koaxiale Rotorsystem vor dem Bestimmen des Wertesatzes für den Parametersatz, wobei das Bestimmen des Wertesatzes für den Parametersatz die Verwendung des gewünschten Gesamtschubs aufweist.

11. Die Vorrichtung gemäß einem der Ansprüche 9 bis 10, aufweisend Mittel zum Wählen eines Indexwinkels des mitrotierenden koaxialen Rotorsystems vor dem Bestimmen des Wertesatzes für den Parametersatz; oder wobei die Mittel zum Bestimmen des Wertesatzes für den Parametersatz zum Bestimmen eines Indexwinkels des mitrotierenden koaxialen Rotorsystems konfiguriert sind.

**12.** Die Vorrichtung gemäß einem der Ansprüche 9 bis 11, wobei die Mittel zum Bestimmen des Wertesatzes für den Parametersatz Mittel zum Optimieren des Wertesatzes auf der Grundlage der Minimierung der gesamten induzierten Leistung für den statischen Schwebeflug aufweisen.

**13.** Die Vorrichtung gemäß einem der Ansprüche 9 bis 12, wobei der Parametersatz ein Verhältnis der jeweiligen Rotorscheibenflächen des oberen Rotors und des unteren Rotors des mitrotierenden koaxialen Rotorsystems aufweist; und wobei der Parametersatz optional den oberen Rotordurchmesser und den unteren Rotordurchmesser aufweist.

**14.** Die Vorrichtung nach einem der Ansprüche 9 bis 13, aufweisend Mittel zum Zuweisen eines inneren Bereichs des unteren Rotors von einer Abwindgrenze des oberen Rotors aus, der weniger Schub hat als ein äußerer Bereich des unteren Rotors von der Abwindgrenze des oberen Rotors aus, und wobei der Parametersatz wahlweise eine stufenweise Änderung der Sehne des unteren Rotors aufweist.

**15.** Die Vorrichtung gemäß einem der Ansprüche 9 bis 14, wobei das Verhältnis der jeweiligen gewünschten Schübe eines oberen Rotors und eines unteren Rotors des mitrotierenden koaxialen Rotorsystems 1:1 beträgt und/oder wobei die Drehmomente des oberen Rotors und des unteren Rotors in den Parametersatz als Verhältnis des Drehmoments des oberen Rotors und des Drehmoments des unteren Rotors einbezogen sind.

**Revendications**

**1.** Procédé de génération d'un ensemble de valeurs pour des paramètres respectifs d'un ensemble de paramètres utilisés dans la détermination de profils de pales de rotor pour un système de rotor coaxial corotatif, le procédé comprenant :

l'établissement d'un rapport de poussées souhaitées respectives d'un rotor supérieur et d'un rotor inférieur du système de rotor coaxial corotatif sur la base d'une performance souhaitée du système de rotor coaxial corotatif ; et
la détermination de l'ensemble de valeurs de l'ensemble de paramètres à partir du rapport de poussées souhaitées sur la base d'une condition de vitesse de rotation égale entre le rotor supérieur et le rotor inférieur du système de rotor coaxial corotatif, dans lequel l'ensemble des paramètres comprend des couples du rotor supérieur et du rotor inférieur.

**2.** Procédé selon la revendication 1, comprenant l'établissement d'un diamètre de rotor maximum pour le système de rotor coaxial corotatif avant la détermination de l'ensemble de valeurs pour l'ensemble de paramètres, et la détermination de l'ensemble de valeurs pour l'ensemble de paramètres comprend l'utilisation du diamètre de rotor maximum.

**3.** Procédé selon les revendications 1 ou 2, comprenant l'établissement d'une poussée totale souhaitée pour le système de rotor coaxial corotatif avant la détermination de l'ensemble de valeurs pour l'ensemble de paramètres, et la détermination de l'ensemble de valeurs pour l'ensemble de paramètres comprend l'utilisation de la poussée totale souhaitée.

**4.** Procédé selon l'une quelconque des revendications 1 à 3, comprenant le choix d'un angle d'indexation du système de rotor coaxial corotatif avant la détermination de l'ensemble de valeurs pour l'ensemble de paramètres ; ou dans lequel la détermination de l'ensemble de valeurs pour l'ensemble de paramètres comprend la détermination d'un angle d'indexation du système de rotor coaxial corotatif.

**5.** Procédé selon l'une quelconque des revendications 1 à 4, dans lequel la détermination de l'ensemble de valeurs pour l'ensemble de paramètres comprend l'optimisation de l'ensemble de valeurs sur la base de la minimisation de la puissance induite totale pour le vol stationnaire statique.

**6.** Procédé selon l'une quelconque des revendications 1 à 5, dans lequel l'ensemble de paramètres comprend un rapport de surfaces respectives de disques de rotor du rotor supérieur et du rotor inférieur du système de rotor coaxial corotatif ; et éventuellement dans lequel l'ensemble de paramètres comprend le diamètre de rotor supérieur et le diamètre de rotor inférieur.

**7.** Procédé selon l'une quelconque des revendications 1 à 6, comprenant l'attribution d'une région intérieure du rotor inférieur à partir d'une limite du souffle du rotor supérieur une poussée moindre par rapport à une région extérieure du rotor inférieur à partir de la limite du souffle du rotor supérieur ; et éventuellement dans lequel l'ensemble de paramètres comprend un changement par étapes dans la corde du rotor inférieur.

**8.** Procédé selon l'une quelconque des revendications 1 à 7, dans lequel le rapport de poussées souhaitées respectives d'un rotor supérieur et d'un rotor inférieur du système de rotor coaxial corotatif est de 1 : 1 ; et/ou dans lequel les couples du rotor supérieur et du rotor inférieur sont inclus dans l'ensemble de paramètres en tant que rapport du couple du rotor supérieur et du couple du rotor inférieur.

**9.** Système de génération d'un ensemble de valeurs pour des paramètres respectifs d'un ensemble de paramètres utilisés dans la détermination de profils de pales de rotor pour un système de rotor coaxial corotatif, le système comprenant :

des moyens pour établir un rapport de poussées souhaitées respectives d'un rotor supérieur et d'un rotor inférieur du système de rotor coaxial corotatif sur la base d'une performance souhaitée du système de rotor coaxial corotatif ; et
des moyens pour déterminer l'ensemble de valeurs de l'ensemble de paramètres à partir du rapport de poussées souhaitées sur la base d'une condition de vitesse de rotation égale entre le rotor supérieur et le rotor inférieur du système de rotor coaxial corotatif, dans lequel l'ensemble de paramètres comprend des couples du rotor supérieur et du rotor inférieur.

**10.** Système selon la revendication 9, comprenant des moyens pour établir un diamètre de rotor maximum pour le système de rotor coaxial corotatif avant de déterminer l'ensemble de valeurs pour l'ensemble de paramètres et la détermination de l'ensemble de valeurs pour l'ensemble de paramètres comprend l'utilisation du diamètre de rotor maximum ; et/ou comprenant des moyens pour établir une poussée totale souhaitée pour le système de rotor coaxial corotatif avant de déterminer l'ensemble de valeurs pour l'ensemble de paramètres et la détermination de l'ensemble de valeurs pour l'ensemble de paramètres comprend l'utilisation de la poussée totale souhaitée.

**11.** Système selon l'une quelconque des revendications 9 à 10, comprenant des moyens pour choisir un angle d'indexation du système de rotor coaxial corotatif avant de déterminer l'ensemble de valeurs pour l'ensemble de paramètres ; ou dans lequel les moyens pour déterminer l'ensemble de valeurs pour l'ensemble de paramètres sont configurés pour déterminer un angle d'indexation du système de rotor coaxial corotatif.

**12.** Système selon l'une quelconque des revendications 9 à 11, dans lequel le moyen pour déterminer l'ensemble de valeurs pour l'ensemble de paramètres comprend un moyen pour optimiser l'ensemble de valeurs basé sur la minimisation de la puissance induite totale pour le vol stationnaire statique.

**13.** Système selon l'une quelconque des revendications 9 à 12, dans lequel l'ensemble de paramètres comprend un rapport de surfaces respectives de disques de rotor du rotor supérieur et du rotor inférieur du système de rotor coaxial corotatif ; et éventuellement dans lequel l'ensemble de paramètres comprend le diamètre du rotor supérieur et le diamètre du rotor inférieur.

**14.** Système selon l'une quelconque des revendications 9 à 13, comprenant des moyens pour attribuer à une région intérieure du rotor inférieur à partir d'une limite du souffle du rotor supérieur une poussée moindre par rapport à une région extérieure du rotor inférieur à partir de la limite du souffle du rotor supérieur ; et éventuellement dans lequel l'ensemble de paramètres comprend un changement par étapes de la corde du rotor inférieur.

**15.** Système selon l'une quelconque des revendications 9 à 14, dans lequel le rapport de poussées souhaitées respectives d'un rotor supérieur et d'un rotor inférieur du système de rotor coaxial corotatif est de 1 : 1, et/ou dans lequel les couples du rotor supérieur et du rotor inférieur sont inclus dans l'ensemble de paramètres en tant que rapport du couple du rotor supérieur et du couple du rotor inférieur.

Dissimilar
Rotor Diameters

3D View

Upper Rotor Diameter = 1.920m

Side View

Lower Rotor Diameter = 2.032m

Figure 1

202

200    206b

205

204

207b

201

Dissimilar Rotor
Blade Geometries

206a

Direction of Rotation
for Both Upper and
Lower Rotors

207a    Figure 2

Figure 3

400

402

establishing a ratio of respective desired thrusts of an upper rotor and a lower rotor of the corotating coaxial rotor system based on a desired performance of the corotating coaxial rotor system

404

determining the set of values of the set of parameters from the desired thrusts ratio based on an equal rotation speed condition between the upper rotor and the lower rotor of the corotating coaxial rotor system, wherein the set of parameters includes torques of the upper rotor and the lower rotor

Figure 4

500

512

504

502

506

508

510

514

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- SG 2015050489 W


### Non-patent literature cited in the description

- **UEHARA, D.** ; **SIROHI, J.** ; **BHAGWAT, M. J.** Hover Performance of Corotating and Counterrotating Coaxial Rotors. *Journal of the American Helicopter Society*, January 2020, vol. 65 (1), 012006
- **CHAN, K. I.** Generalized Aerodynamic Optimization of Hovering Coaxial Rotor Blades. *Journal of the American Helicopter Society*, April 2019, vol. 64 (2), 022006
- **LEISHMAN, J. G.** ; **SYAL, M.** Figure of Merit Definition for Coaxial Rotors. *Journal of the American Helicopter Society*, July 2008, vol. 53 (3), 290-300
- **RAND, O.** ; **KHROMOV, V.** Aerodynamic Optimization of Coaxial Rotor in Hover and Axial Flight. *27th International Congress of the Aeronautical Sciences, Nice, France, September 19-24, 2010*, 19 September 2010
- **LAKSHMINARAYAN, V. K.** ; **BAEDER, J. D.** High-Resolution Computational Investigation of Trimmed Coaxial Rotor Aerodynamics in Hover. *Journal of the American Helicopter Society*, October 2009, vol. 54 (4), 042008
- Aerodynamics and Aeroacoustic Sources of a Coaxial Rotor. **SCHATZMAN, N. L.** PhD Thesis. Georgia Institute of Technology, May 2018
- Computational Aeroacoustic Investigation of Co-rotating Rotors for Urban Air Mobility. **SHUBHAM**. Masters Thesis. Delft University of Technology, January 2020